# EUROPÄISCHE PATENTSCHRIFT

(11) **EP 2 509 778 B1**
(45) Veröffentlichungstag und Bekanntmachung des Hinweises auf die Patenterteilung: **13.08.2014**
(21) Anmeldenummer: 10759876.5
(22) Anmeldetag: 27.09.2010
(51) Int. Cl.: B29D 30/32, B29D 30/24

(54) **VORRICHTUNG ZUM HOCHSCHLAGEN EINES REIFENAUFBAUTEILES AUF EINER REIFENAUFBAUTROMMEL MIT EINEM ROLLENHEBEL**
TIRE ELEMENT TURN-UP DEVICE ON A TIRE BUILDING DRUM WITH ROLLER ARM
DISPOSITIF POUR RELEVER UNE PARTIE D'UN PNEUMATIQUE SUR UN TAMBOUR DE FABRICATION AVEC UN LEVIER À GALETS

(30) Priorität: 09.12.2009 DE 102009044830
(43) Veröffentlichungstag der Anmeldung: 17.10.2012
(73) Patentinhaber: Continental Reifen Deutschland GmbH, 30165 Hannover (DE)
(72) Erfinder: HANKE, Andreas, 30449 Hannover (DE); PAWLIK, Karl-Heinz, 30455 Hannover (DE)
(74) Vertreter: Finger, Karsten
(86) Internationale Anmeldenummer: PCT/EP2010/064204
(87) Internationale Veröffentlichungsnummer: WO 2011/069699

(56) Entgegenhaltungen:
- EP-A2- 0 808 707
- WO-A1-2009/070019
- DE-A1- 1 916 768

## Beschreibung

Die Erfindung betrifft eine Vorrichtung zum Hochschlagen eines Reifenaufbauteiles auf einer Reifenaufbautrommel mit einem Rollenhebel gemäß dem Oberbegriff des Patentanspruchs 1.

Eine Vorrichtung dieser Art ist aus der DE-C1-19 934 791 oder aus der EP-A-0 808 707 bekannt.

Bei der herkömmlichen Herstellung von Neureifen erfolgt ein Herstellungsschritt auf einer Reifenaufbautrommel, bei der die zunächst flach aufliegende Reifenkarkasse durch einen Expansionsvorgang bombiert wird. Der eigentliche Bombiervorgang der Karkasse erfolgt beispielsweise über einen Mittenbalg, der den mittleren Bereich der Karkasse expandiert. Anschließend werden bei diesem Vorgang die beiden äußeren Seitenwände an der bombierten Karkasse hochgeschlagen und dabei um die Wulstkerne gefaltet. Dieser Vorgang des Hochkrempelns der Reifenseitenwände erfolgt entweder mit sogenannten Seitenbombierbälgen oder mit einem kranzförmig über den Umfang angeordneten Rollenhebelsystem. Beim Einsatz von Seitenbombierbälgen werden zwei im Bereich der Seitenwandlagen angeordnete Blähbälge aufgeblasen, die auf diese Weise die Seitenwände an die bombierte Karkasse pressen. Der Hochschlagvorgang mit Hilfe von Seitenbombierbälgen kann den Nachteil aufweisen, dass diese Bälge nicht bis in die Schulterbereiche des Reifenrohlings wirken, wodurch manuelle Nacharbeit erforderlich wird. Darüber hinaus sind die Seitenbombierbälge einem hohen Verschleiß unterworfen, wobei ein entsprechend häufiger Austausch erforderlich ist, der mit sehr viel Zeitaufwand verbunden ist.

Das Hochschlagen der Seitenwände mit Hilfe eines Rollenhebelsystems ist beispielsweise in der DE 199 34 791 C1 offenbart. Bei dieser Vorrichtung erfolgt das Auseinanderspreizen des Rollenhebelsystems über einen pneumatischen Antrieb, der aus zwei separaten Pneumatikzylindern besteht. Die beiden Pneumatikzylinder werden separat mit Druckluft beaufschlagt, wodurch das Reifenhebelsystem auseinanderspreizt und dadurch die Seitenwände an der Karkasse hochschlägt.

Ein wesentlicher Nachteil bei diesem Prinzip besteht darin, dass bei empfindlichen dünnen Seitenwänden und bestimmten Reifenkonstruktionen es durch die gegenläufige Drehbewegung der Rollen zu unlässigen Fehlern kommen kann, z.B. in Form einer Faltenbildung oder einer Materialverlagerung im Reifenrohling. Durch den Kontakt der Rollenmantelflächen, z. B. mit den Kernklemmsegmenten oder anderen Teilen der Reifenaufbautrommel, wird zu Beginn der Rollenhebelbewegung zwangsläufig eine Drehbewegung der Rollen erzeugt, die die Reifenaufbauteile in den Spalt zwischen Kernsegment und Rolle fördert und dadurch eine unzulässige Faltenbildung insbesondere bei dünnen Materialien begünstigt. Diese Faltenbildung kann zu einem Ausschuss des Reifenrohlings führen.

Die EP 0 808 707 A2, DE 19 16 768 A1 und WO 2009/070019 offenbaren weitere bekannte Vorrichtungen zum Hochschlagen eines Reifenaufbauteiles auf einer Reifenaufbautrommel.

Der Erfindung liegt die Aufgabe zugrunde, eine Vorrichtung zum Hochschlagen eines Reifenaufbauteiles auf einer Reifenaufbautrommel zu schaffen, mit der das Reifenaufbauteil ohne Fehlstellen, insb. ohne eine unbeabsichtigte Faltenbildung in der Seitenwand, hochgeschlagen wird.

Gelöst wird die Aufgabe gemäß dem Oberbegriff und den kennzeichnenden Merkmalen des Anspruchs 1.

Ein Vorteil der Erfmdung ist insbesondere darin zu sehen, dass durch die erfindungsgemäße Vorrichtung Falten und andere Fehler beim Hochschlagen der Seitenwand und der Wulstbauteile auf eine effiziente Weise vermieden werden. Die Rolle bzw. Krempelrolle am Rollenhebel hat durch die Anheberolle und das Anheben des Rollenhebels auf die Vorposition keinen Kontakt zu umgebenden Bauteilen der Reifenaufbautrommel, wodurch die Rolle nicht an den umgebenden Bauteilen abrollt und eine gegenläufige Drehbewegung der Rolle das aufliegende Reifenaufbauteil unbeabsichtigt zusammenfaltet oder zusammenschiebt. Stattdessen steht die Rolle nunmehr im Wesentlichen ausschließlich mit dem aufliegenden Reifenaufbauteil in Kontakt und rollt somit in der Anfangsphase des Arbeitshubes bzw. bei der Vorbereitung des Hochschlagens des Reifenaufbauteiles auf dem Reifenaufbauteil entlang. Diese Anfangsphase des Arbeithubes umfasst das Anheben der Rollenhebel bis auf die Vorposition. Auf diese Weise werden Produktionsfehlstellen am Reifen, insbesondere an der Reifenseitenwand in einem hohen Maße unterbunden. Es können des Weiteren Reifen in einem erweiterten Dimensionsbereich als mit dem bisherigen Verfahren des Standes der Technik gefertigt werden.

Gemäß der Erfindung ist auch vorgesehen, dass das rampenförmige Bauteil eine im Querschnitt S-förmige Kontur aufweist, wodurch der Rollenhebel kontinuierlich von einer Anfangsposition in die Vorposition angehoben wird.

Durch die S-förmige Kontur des rampenförmigen Bauteiles wird der Rollenhebel in eine Vorposition ausgefahren, der zur Verfestigung des Reifenrohlings im Wulstbereich beim Bombiervorgang dient. Dadurch wird die Seitenwand beim Bombiervorgang und beim Andrücken mit den Krempelrollen fest mit dem Reifenwulst verbunden.

In einer weiteren vorteilhaften Weiterbildung der Erfindung ist vorgesehen, dass der Rollenhebel mit einem separaten ersten Pneumatikzylinder in die Vorposition angehoben wird, wobei der restliche Arbeitshub des Rollenhebels mit einem zweiten Pneumatikzylinder erfolgt.

Auf diese Weise wird der Rollenhebel kontinuierlich auf die vorgegebene Vorposition angehoben. Außerdem kann an dem separaten ersten Pneumatikzylinder für die Vorpositon ein definiter Arbeitsdruck eingestellt werden, mit dem die Krempelrollen die Seitenwand am Reifenwulst verfestigen sollen. Der restliche Arbeitshub der Rollenhebel kann anschließend mit einem zweiten Arbeitsdruck erfolgen.

In einer weiteren vorteilhaften Weiterbildung der Erfindung ist vorgesehen, dass das rampenförmige Bauteil eine Verriegelung zum Verriegeln des Rollenhebels umfasst. Durch die Verriegelung der Hebel wird auf einfache Weise eine Kollision beim Rotieren der Reifenaufbautrommel mit anderen Maschinenteilen vermieden. Ohne eine Verriegelung würden die Rotationskräfte die Rollenhebel ggfs. schon vorab zu einem Auseinanderspreizen bewegen.

In einer weiteren vorteilhaften Weiterbildung der Erfindung ist vorgesehen, dass die Verriegelung eine Aussparung im rampenförmigen Bauteil umfasst, in die im Verriegelungszustand ein am Rollenhebel angeordnetes Verriegelungselement eingreift. Mit einem solchen Verriegelungselement lassen sich die Rollenhebel im eingefahrenen Zustand auf einfache Weise fixieren.

In einer weiteren vorteilhaften Weiterbildung der Erfindung ist vorgesehen, dass bei einer Bewegung des Rollenhebels in axialer Richtung der Rollenhebel automatisch entriegelt und der Rollenhebel anschließend auf die Vorposition angehoben wird.

Dadurch ist keine separate Steuerung erforderlich, mit dem die Rollenhebel entriegelt werden müssten.

In einer weiteren vorteilhaften Weiterbildung der Erfindung ist vorgesehen, dass die Anheberolle im Wesentlichen auf der halben Länge des Rollenhebels auf dessen Unterseite angeordnet ist.

Aufgrund der Hebelwirkung wird der Rollenhebel auf der Seite der Krempelrolle effektiv in die Vorposition angehoben.

In einer weiteren vorteilhaften Weiterbildung der Erfindung ist vorgesehen, dass der Rollenhebel auf seiner Oberseite mindestens eine Aussparung zur Aufnahme eines Riemens aufweist.

Mit den Riemen wird gewährleistet, dass die Rollenhebel auf einfache Weise nach dem Bombiervorgang in ihrer Ausgangsposition zurückkehren.

In einer weiteren vorteilhaften Weiterbildung der Erfindung ist vorgesehen, dass die Rolle mit einer Antihaftbeschichtung versehen ist. Dadurch wird gewährleistet, dass die Rolle auf dem Reifenaufbauteil abrollt und nicht dieses Material an der Rolle hängenbleibt.

In vorteilhafter Weise kann die Reifenaufbautrommel eine Vielzahl achsensymtrisch angeordneter Rollenhebel umfassen. Auf diese Weise wird gewährleistet, dass die Seitenwand des herzustellenden Reifens an allen Stellen gleichmäßig hochgerollt wird.

In einer weiteren vorteilhaften Weise können die Rollenhebel drehbar mit einem axial verfahrbaren Bauteil der Reifenaufbautrommel gekoppelt sein und beim Hochschlagen auseinanderfahren.

Anhand eines Ausführungsbeispiels soll die Erfindung näher erläutert werden.

Es zeigen:
- Fig. 1:: Die erfindungsgemäße Vorrichtung in der Ausgangsposition.
- Fig. 2:: Die Vorrichtung beim Verfahren des Rollenhebels in die Vorposition.
- Fig. 3:: Die Vorrichtung, bei der der Rollenhebel in die Vorposition gebracht wurde.
- Fig. 4:: Die Vorrichtung, bei der die Reifenseitenwand komplett hochgeschlagen wurde und der restliche Arbeitshub abgeschlossen ist.

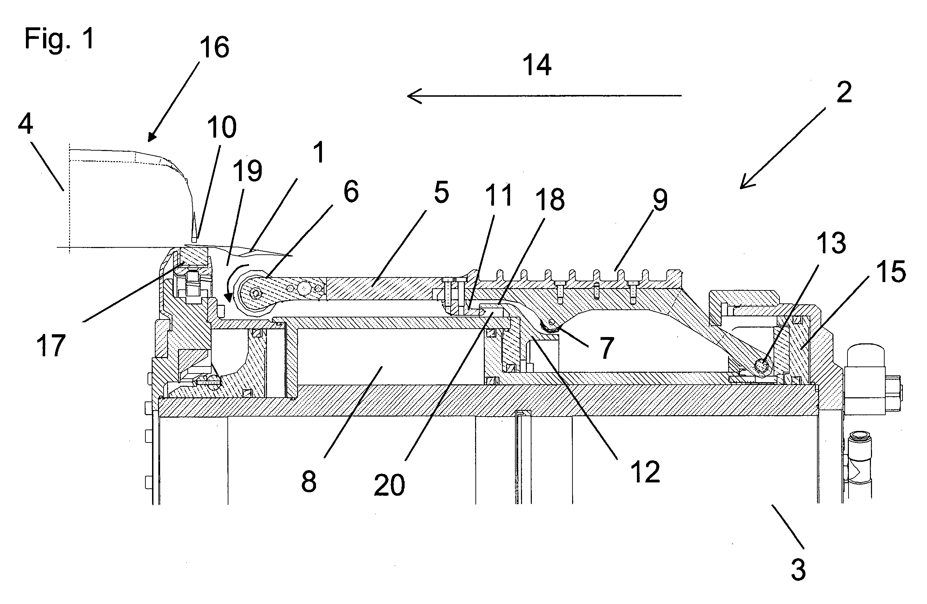

Die Figur 1 zeigt einen Teilausschnitt einer Reifenaufbautrommel 2 mit der erfindungsgemäßen Vorrichtung zum Hochschlagen eines Reifenaufbauteiles 1, welches im Wesentlichen die Reifenseitenwand des herzustellenden Reifens bildet. Die Reifenaufbautrommel 2 ist im Wesentlichen achsensymmetrisch zur Trommelachse 3 und zur Trommelmitte 4 aufgebaut, weshalb die Darstellung der jeweils gegenüberliegenden Bauteile in der Figur nicht dargestellt sind.

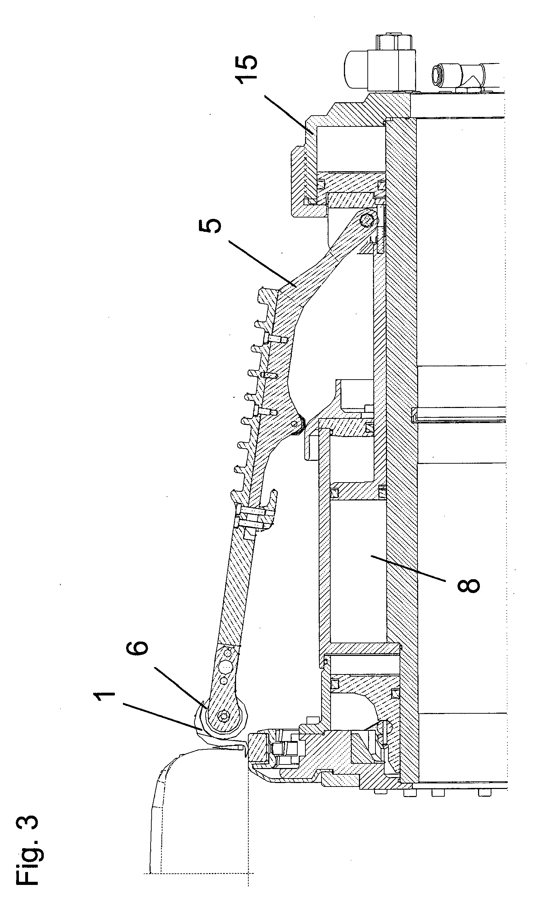

Am Rollenhebel 5 sind an einem Ende zwei Rollen 6 angeordnet, wobei in dieser Seitenansicht nur eine Rolle sichtbar ist. Die zweite Rolle liegt direkt hinter der ersten Rolle, wobei beide Rollen in der Aufsicht des Rollenhebels 5 symmetrisch angeordnet sind und mittels einer Wälzlagerung mit dem Rollenhebel 5 drehbar verbunden sind. Gegenüberliegend zum Rollenhebel 5 ist ein Kernspannsegment 17 angeordnet. Das Segment 17 bewegt sich in einem ersten Arbeitsschritt zum Einspannen des Reifenkerns 10 radial nach außen. Der Rollenhebel 2 ist im Drehpunkt 13 drehbar gelagert und wird über die Betätigung des Pneumatikzylinders 15 in die axiale Richtung 14 in die in der Fig. 3 dargestellte Vorposition bewegt. Zunächst erfolgt ein Vorgang der Vorbereitung des Hochschlagens des Reifenaufbauteiles bzw. der Vorgang der Anfangsphase des Arbeitshubes, die mit der Positionierung des Rollenhebels in die Vorposition abschließt. Ziel dieser Anfangsphase des Arbeitshubes ist es, dass die Rollen 6 direkt im unteren Bereich des Reifenwulstes positioniert werden. Ernst danach erfolgt das Hochschlagen der Seitenwände, in dem die Rollen 6 das Reifenaufbauteil 1 gegen die bombierte Reifenkarkasse 16 hochrollen. Dieses Hochschlagen erfolgt durch eine weitere axiale Bewegung des Rollenhebels 2, die bei dieser Bewegung sozusagen auseinanderspreizen. Der Rollenhebel 5 besitzt an seiner Unterseite die Anheberolle 7, zu der gegenüberliegend das S-förmige rampenförmige Bauteil 12 angeordnet ist. Das rampenförmige Bauteil 12 ist am Pneumatikzylinder 8 angeordnet. An dem rampenförmigen Bauteil 12 ist ebenfalls eine Verriegelung 18 mit einer entsprechenden Aussparung 20 angeordnet. In diese Aussparung 20 greift das Verriegelselement 11 ein, welches mit den Rollenhebel 5 verbunden ist. Dadurch wird der Rollenhebel 5 in seiner Ausgangsposition fest mit der Verriegelung 18 des rampenförmigen Bauteiles 12 verriegelt. Am hinteren Ende des Rollenhebels 5 ist ein erster Pneumatikzylinder 15 angeordnet, mit dem der Rollenhebel in die Vorposition angehoben wird.

Mit dem Pneumatikzylinder 8 erfolgt anschließend der restliche Arbeitshub des Rollenhebels 5.

Die Rolle 6 hat im Wesentlichen ausschließlich einen Kontakt mit dem aufliegenden Reifenaufbauteil 1, wodurch die Rolle 6 in Drehrichtung 19 auf dem Reifenaufbauteil 1 entlang rollt. Dadurch schiebt die Rolle 6 das Material des Reifenaufbauteiles 1 nicht vor sich her und es kommt nicht zu einer unzulässigen Faltenbildung, die zu einem Ausschuss des Reifens führen würde. Nach dieser Anfangsphase des Arbeitshubes bzw. der Positionierung des Rollenhebels auf die Vorposition erfolgt das eigentliche Hochschlagen der Seitenwände und eine weitere Konfektionierung des Reifens nach einem herkömmlichen Verfahren.

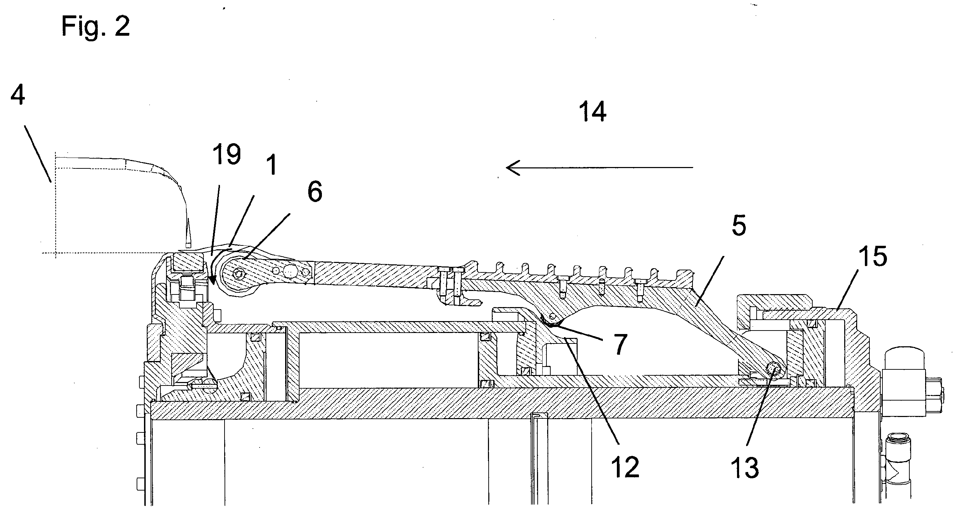

Die Fig. 2 zeigt den Vorgang, bei dem der Rollenhebel 5 in die Vorposition angehoben wird. Über den Pneumatikzylinder 15 wird der Rollenhebel in axialer Richtung 14 verschoben. Durch die Anheberolle 7 wird der Rollenhebel aufgrund der s-förmigen Kontur des rampenförmigen Teiles 12 auf die Vorposition angehoben. Die Krempelrolle 6 tritt dabei in Kontakt mit der Reifenseitenwand 1, wodurch die Krempelrolle 6 in Drehrichtung 19 am Reifenbauteil 1 abrollt.

Die Fig. 3 zeigt den Vorgang, bei dem der Rollenhebel 5 in seine Vorposition angehoben worden ist. Die Krempelrollen 6 haben das Reifenbauteil 1 bzw. die Reifenseitenwand 1 umgekrempelt und fest mit dem Reifenwulst verbunden.

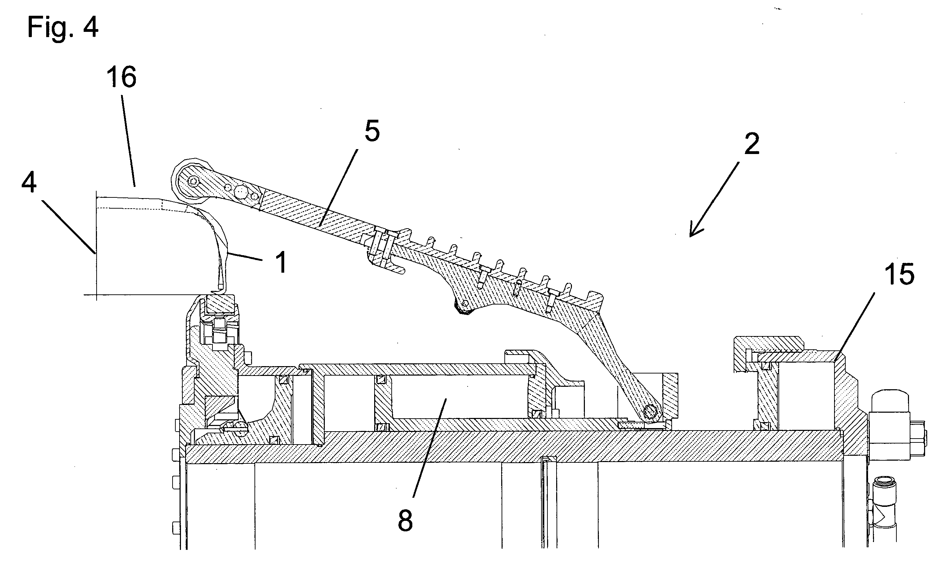

Die Fig. 4 zeigt den Vorgang, bei dem die Reifenseitenwand komplett an der Reifenkarkasse 16 hoch geschlagen worden ist. Der Rollenhebel 5 wurde über den Pneumatikzylinder 8 in seine äußerste Position bewegt, um die Reifenseitenwände fest mit der Reifenkarkasse zu verbinden.

Anschließend werden die Rollenhebel 5 wieder in ihre Ausgangspostion zurückverfahren und die fertig gestellte Reifenkarkasse von der Reifenaufbautrommel 2 abgenommen. Die Fertigstellung des Fahrzeugreifens erfolgt sodann mit einem konventionellen Herstellungsverfahren.

### Bezugszeichenliste

### (ist Teil der Beschreibung)

- 1: Reifenaufbauteil
- 2: Reifenaufbautrommel
- 3: Trommelachse
- 4: Trommelmitte
- 5: Rollenhebel
- 6: Rollen, bzw. Krempelrolle
- 7: Anheberolle
- 8: Zweiter Pneumatikzylinder
- 9: Aussparung auf Oberseite des Rollenhebels
- 10: Reifenkern
- 11: Verriegelungselement am Rollenhebel
- 12: Rampenförmiges Bauteil
- 13: Drehpunkt
- 14: Axiale Richtung
- 15: Erster Pneumatikzylinder für Vorposition
- 16: Reifenkarkasse
- 17: Kernspannsegment
- 18: Verriegelung am rampenförmigen Bauteil
- 19: Drehrichtung der Rollen
- 20: Aussparung am rampenförmigen Bauteil

## Patentansprüche

1. Vorrichtung zum Hochschlagen eines Reifenaufbauteiles (1) auf einer Reifenaufbautrommel (2) mit mindestens einem Rollenhebel (5) an dem mindestens eine drehbar gelagerte Krempelrolle (6) angeordnet ist,
wobei der Rollenhebel (5) drehbar an einem in axialer Richtung zur Trommelachse (3) verfahrbaren Bauteil angeordnet ist,
wobei der Rollenhebel (5) das Reifenbauteil (1) in radialer Richtung an einem Reifenrohling hochschlägt,
wodurch das Reifenbauteil (1) umgekrempelt und mit dem Reifenrohling verbunden wird,
wobei der Rollenhebel (5) auf seiner zur Trommelachse (3) der Reifenaufbautrommel (2) gerichteten Seite eine Anheberolle (7) aufweist zu der gegenüberliegend ein rampenförmiges Bauteil (12) angeordnet ist,
**dadurch gekennzeichnet, dass**
der Rollenhebel (5) beim Hochschlagen des Reifenbauteiles (1) durch die Anheberolle (7) auf eine Vorposition angehoben wird,
wobei beim Anheben der Rollenhebel (5) auf die Vorposition die Krempelrolle (6) dergestalt von umgebenden Bauteilen der Reifenaufbautrommel beabstandet ist, dass die Krempelrolle (6) im Wesentlichen ausschließlich mit dem Reifenaufbauteil (1) in Kontakt steht und die Rolle an dem Reifenaufbauteil (6) entlang abrollt,
wobei das rampenförmige Bauteil (12) eine im Querschnitt S-förmige Kontur aufweist, wodurch der Rollenhebel (5) kontinuierlich von einer Anfangsposition in die Vorposition angehoben wird.

2. Vorrichtung nach Anspruch 1,
**dadurch gekennzeichnet, dass**
der Rollenhebel (5) mit einem separaten ersten Pneumatikzylinder (15) in die Vorposition angehoben wird, wobei der restliche Arbeitshub des Rollenhebels (5) mit einem zweiten Pneumatikzylinder (8) erfolgt.

3. Vorrichtung nach einem der vorhergehenden Ansprüche,
**dadurch gekennzeichnet, dass**
das rampenförmigen Bauteil (12) eine Verriegelung (18) zum Verriegeln des Rollenhebels (5) umfasst.

4. Vorrichtung nach einem der vorhergehenden Ansprüche,
**dadurch gekennzeichnet, dass**
die Verriegelung (18) eine Aussparung (20) im rampenförmigen Bauteil (12) umfasst, in die im Verriegelungszustand ein am Rollenhebel (5) angeordnetes Verriegelungselement (11) eingreift.

5. Vorrichtung nach einem der vorhergehenden Ansprüche,
**dadurch gekennzeichnet, dass**
bei einer Bewegung des Rollenhebels (5) in axialer Richtung (14) der Rollenhebel (5) automatisch entriegelt und der Rollenhebel anschließend auf die Vorposition angehoben wird.

6. Vorrichtung nach einem der vorhergehenden Ansprüche,
**dadurch gekennzeichnet, dass**
die Anheberolle (7) im Wesentlichen auf der halben Länge des Rollenhebels (5) auf dessen Unterseite angeordnet ist.

7. Vorrichtung nach einem der vorhergehenden Ansprüche,
**dadurch gekennzeichnet, dass**
der Rollenhebel (5) auf seiner Oberseite mindestens eine Aussparung (9) zur Aufnahme eines Riemens aufweist.

8. Vorrichtung nach einem der vorhergehenden Ansprüche,
**dadurch gekennzeichnet, dass**
die Krempelrolle (6) mit einer Antihaftbeschichtung versehen ist.

## Claims

1. Device for turning up a tyre-building part (1) on a tyre-building drum (2) with at least one roller lever (5), on which at least one rotatably mounted crimping roller (6) is arranged, wherein the roller lever (5) is arranged rotatably on a component which can be moved in an axial direction in relation to the drum axis (3), wherein the roller lever (5) turns up the tyre-building part (1) in a radial direction on a tyre blank, whereby the tyre-building part (1) is folded over and joined to the tyre blank, wherein the roller lever (5) has a lifting roller (7) on the side thereof directed towards the drum axis (3) of the tyre-building drum (2), opposite which a ramp-shaped component (12) is arranged, **characterized in that**, in the process of turning up the tyre-building part (1), the roller lever (5) is raised by means of the lifting roller (7) to a preliminary position, wherein, as the roller lever (5) is raised to the preliminary position, the crimping roller (6) is kept at such a distance from the surrounding components of the tyre-building drum that the crimping roller (6) is substantially exclusively in contact with the tyre-building part (1) and the roller rolls along the tyre-building part (1), wherein the ramp-shaped component (12) has a cross-sectionally S-shaped contour, whereby the roller lever (5) is raised continuously from a starting position into the preliminary position.

2. Device according to Claim 1, **characterized in that** the roller lever (5) is raised into the preliminary position by means of a separate first pneumatic cylinder (15), the remaining working stroke of the roller lever (5) being performed by means of a second pneumatic cylinder (8).

3. Device according to one of the preceding claims, **characterized in that** the ramp-shaped component (12) comprises a locking feature (18) for locking the roller lever (5).

4. Device according to one of the preceding claims, **characterized in that** the locking feature (18) comprises a recess (20) in the ramp-shaped component (12), into which recess a locking element (11) arranged on the roller lever (5) engages in the locked state.

5. Device according to one of the preceding claims, **characterized in that** the roller lever (5) is automatically unlocked when the roller lever (5) is moved in the axial direction (14), and the roller lever is then raised into the preliminary position.

6. Device according to one of the preceding claims, **characterized in that** the lifting roller (7) is arranged substantially half way along the roller lever (5), on the underside of the latter.

7. Device according to one of the preceding claims, **characterized in that** the roller lever (5) has on its upper side at least one recess (9) for receiving a belt.

8. Device according to one of the preceding claims, **characterized in that** the crimping roller (6) is provided with a nonstick coating.

## Revendications

1. Dispositif pour relever une partie de montage de pneumatique (1) sur un tambour de montage de pneumatique (2) comprenant au moins un levier à rouleau (5) sur lequel est disposé au moins un rouleau de sertissage (6) monté à rotation,
le levier à rouleau (5) étant disposé de manière rotative sur un composant déplaçable dans la direction axiale par rapport à l'axe du tambour (3),
le levier à rouleau (5) relevant la partie de montage de pneumatique (1) dans la direction radiale au niveau d'une ébauche de pneumatique,
de sorte que la partie de montage de pneumatique (1) soit repliée par sertissage et connectée à l'ébauche de pneumatique,
le levier à rouleau (5) présentant, sur son côté orienté vers l'axe de tambour (3) du tambour de montage de pneumatique (2), un rouleau de levage (7) en regard duquel est disposé un composant en forme de rampe (12),
**caractérisé en ce que**
le levier à rouleau (5), lors du relevage de la partie de montage de pneumatique (1), est soulevé par le rouleau de levage (7) dans une position préliminaire,
le rouleau de sertissage (6), lors du soulèvement du levier à rouleau (5) dans la position préliminaire, étant espacé des composants périphériques du tambour de montage de pneumatique de telle sorte que le rouleau de sertissage (6) soit essentiellement exclusivement en contact avec la partie de montage de pneumatique (1) et que le rouleau roule le long de la partie de montage de pneumatique (1),
le composant en forme de rampe (12) présentant un contour de section transversale en forme de S, de sorte que le levier à rouleau (5) soit soulevé en continu d'une position de départ dans la position préliminaire.

2. Dispositif selon la revendication 1,
**caractérisé en ce que**
le levier à rouleau (5) est soulevé dans la position préliminaire avec un premier cylindre pneumatique séparé (15), la course de travail restante du levier à rouleau (5) étant effectuée par un deuxième cylindre pneumatique (8).

3. Dispositif selon l'une quelconque des revendications précédentes,
**caractérisé en ce que**
le composant en forme de rampe (12) comprend un verrouillage (18) pour verrouiller le levier à rouleau (5).

4. Dispositif selon l'une quelconque des revendications précédentes,
**caractérisé en ce que**
le verrouillage (18) comprend un évidement (20) dans le composant en forme de rampe (12), dans lequel s'engage, dans l'état de verrouillage, un élément de verrouillage (11) disposé sur le levier à rouleau (5).

5. Dispositif selon l'une quelconque des revendications précédentes,
**caractérisé en ce que**
dans le cas d'un déplacement du levier à rouleau (5) dans la direction axiale (14), le levier à rouleau (5) est automatiquement déverrouillé et le levier à rouleau est ensuite soulevé dans la position préliminaire.

6. Dispositif selon l'une quelconque des revendications précédentes,
**caractérisé en ce que**
le rouleau de levage (7) est disposé essentiellement à mi-longueur sur le levier à rouleau (5) sur son côté inférieur.

7. Dispositif selon l'une quelconque des revendications précédentes,
**caractérisé en ce que**
le levier à rouleau (5) présente sur son côté supérieur au moins un évidement (9) pour recevoir une courroie.

8. Dispositif selon l'une quelconque des revendications précédentes,
**caractérisé en ce que**
le rouleau de sertissage (6) est muni d'un revêtement antiadhésif.
